# EUROPÄISCHE PATENTSCHRIFT

(11) **EP 3 669 097 B1**
(45) Veröffentlichungstag und Bekanntmachung des Hinweises auf die Patenterteilung: **26.05.2021**
(21) Anmeldenummer: 17758829.0
(22) Anmeldetag: 16.08.2017
(51) Int. Cl.: F16D 48/06

(54) **VERFAHREN ZUR KALIBRIERUNG EINES ANTRIEBSSYSTEMS FÜR EINE ACHSE EINES KRAFTFAHRZEUGES**
METHOD FOR CALIBRATING A DRIVE SYSTEM FOR AN AXLE OF A MOTOR VEHICLE
PROCÉDÉ D'ÉTALONNAGE D'UN SYSTÈME D'ENTRAINEMENT D'UN ESSIEU D'UN VÉHICULE AUTOMOBILE

(43) Veröffentlichungstag der Anmeldung: 24.06.2020
(73) Patentinhaber: GKN Automotive Ltd., West Midlands, B37 7YE (GB)
(72) Erfinder: RUITERS, Volker Rene, 53721 Siegburg (DE); LANGHANKI, Andreas, 47259 Duisburg (DE)
(74) Vertreter: karo IP
(86) Internationale Anmeldenummer: PCT/EP2017/070762
(87) Internationale Veröffentlichungsnummer: WO 2019/034248

(56) Entgegenhaltungen:
- WO-A1-2016/177441
- WO-A2-2015/173621
- DE-A1-102006 029 741

## Beschreibung

Die vorliegende Erfindung betrifft ein Verfahren zur Kalibrierung eines Antriebssystems für eine Achse eines Kraftfahrzeuges. Das Antriebssystem umfasst zumindest eine elektrische Maschine als Antriebseinheit, eine von der Antriebseinheit angetriebene Antriebswelle, eine erste Abtriebswelle und eine zweite Abtriebswelle sowie eine die Antriebswelle mit der ersten Abtriebswelle verbindende erste Kupplung und eine die Antriebswelle mit der zweiten Abtriebswelle verbindende zweite Kupplung. Weiter ist eine Steuereinheit zur Regelung der Antriebseinheit und der Kupplungen sowie zur Ermittlung von Drehzahlen der Antriebswelle und der Abtriebswellen vorgesehen. Die Kupplungen sind den Abtriebswellen einer gemeinsamen Achse zugeordnet.

Derartige Antriebssysteme sind z. B. für die Weiterleitung und bedarfsgerechte Aufteilung eines von der Antriebseinheit bereitgestellten Drehmoments vorgesehen. Die eingesetzten Kupplungen werden üblicherweise vor der ersten Inbetriebnahme im Rahmen eines End-of-Line Tests kalibriert, so dass eine Steuereinheit die Kupplungen je nach Betriebspunkt betätigen kann. Der Zustand bzw. (optimale) Betriebspunkt der Kupplungen kann sich jedoch im Laufe der Betriebszeit verändern, z. B. infolge von Vcrschlciß. Damit können die weiter applizierten, zur Übertragung eines Drehmoments ursprünglich erforderlichen Betätigungsdrücke der Kupplungen nach einer bestimmten Betriebszeit dazu führen, dass die von der Steuereinheit berechnete Weiterleitung bzw. Aufteilung des Drehmoments nicht mehr bzw. nicht mehr entsprechend den gewünschten Vorgaben erfolgt. Eine neue Kalibrierung der Kupplungen, z. B. im Rahmen eines Werkstattaufenthalts, ist dann erforderlich. Ein solcher Werkstattaufenthalt ist jedoch unerwünscht, weil für den Nutzer des Fahrzeugs damit Unannehmlichkeiten verbunden sind.

Als Stand der Technik wird z.B. DE 10 2006 029741 angesehen.

Hiervon ausgehend ist es Aufgabe der vorliegenden Erfindung, die eingangs genannten Nachteile und Probleme zumindest teilweise zu lösen und insbesondere ein hierfür geeignetes Verfahren zur (Nach-)Kalibrierung eines Antriebssystems (während des Betriebes) vorzuschlagen. Das Verfahren soll ermöglichen, dass in Abhängigkeit von einem durch die Antriebseinheit bereitgestellten ersten Drehmoment überwiegend oder gar zu jedem Zeitpunkt während eines Betriebs des Antriebssystems ein korrekter Betätigungsdruck an den Kupplungen angelegt wird. Dadurch soll eine möglichst schnelle und genaue Übertragung und Aufteilung des ersten Drehmoments über die Kupplungen auf die Räder einer Achse über Laufzeit ermöglicht werden.

Hierzu trägt ein Verfahren gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Kalibrierung eines Antriebssystems für eine Achse eines Kraftfahrzeuges vorgeschlagen. Das Antriebssystem umfasst zumindest
- eine elektrische Maschine als Antriebseinheit,
- eine von der Antriebseinheit angetriebene Antriebswelle,
- eine erste Abtriebswelle und eine zweite Abtriebswelle,
- eine die Antriebswelle mit der ersten Abtriebswelle verbindende erste Kupplung,
- eine die Antriebswelle mit der zweiten Abtriebswelle verbindende zweite Kupplung, und
- eine Steuereinheit zur Regelung der Antriebseinheit und der Kupplungen sowie zur Ermittlung von Drehzahlen der Antriebswelle und der Abtriebswellen.

Das Verfahren weist zumindest die folgenden Schritte auf:
a) Bereitstellen eines ersten Drehmoments an der Antriebseinheit für einen Betriebspunkt, wobei in dem Betriebspunkt insbesondere eine ungleiche Verteilung der Drehmomente auf die Abtriebswellen erfolgen soll;
b) Ermitteln eines ersten Betätigungsdrucks für die erste Kupplung, Ermitteln eines (von dem ersten Betätigungsdruck unterschiedlichen) zweiten Betätigungsdrucks für die zweite Kupplung aus einem ersten Kennfeld und Applizieren der (ersten und zweiten) Betätigungsdrücke zur betriebspunktabhängigen Übertragung und Aufteilung des ersten Drehmoments (ggf. unter Berücksichtigung einer Übersetzung zwischen der Antriebseinheit und den Abtriebswellen) auf die (ersten und zweiten) Abtriebswellen;
c) Ermitteln einer ersten Ist-Differenzdrehzahl zwischen der ersten Abtriebswelle und der Antriebswelle und einer zweiten Ist-Differenzdrehzahl zwischen der zweiten Abtriebswelle und der Antriebswelle;
d) entweder: Einstellen eines ersten kalibrierten Betätigungsdrucks für die erste Kupplung bis eine erste Soll-Differenzdrehzahl erreicht ist, und Einstellen eines zweiten kalibrierten Betätigungsdrucks für die zweite Kupplung bis eine zweite Soll-Differenzdrehzahl erreicht ist,
   oder: Einstellen eines ersten kalibrierten Drehmoments an der Antriebseinheit bis eine erste Soll-Differenzdrehzahl an der ersten Kupplung und eine zweite Soll-Differenzdrehzahl an der zweiten Kupplung erreicht ist;
e) Erstellen eines zweiten Kennfelds unter Berücksichtigung der (ersten und zweiten) kalibrierten Betätigungsdrücke oder des ersten kalibrierten Drehmoments an der Antriebseinheit, wobei entweder zunächst der höhere Wert der (ersten/zweiten) Betätigungsdrücke geändert wird oder beide (erste und zweite) Betätigungsdrücke gleichzeitig in einer von ihrem Wert abhängigen Gewichtung geändert werden.

Die obige (nicht abschließende) Einteilung der Verfahrensschritte in a) bis e) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes des Antriebssystems kann variieren. Ebenso ist möglich, dass Verfahrensschritte einander zumindest teilweise zeitlich überlagern und/oder dass einzelne oder mehrere Verfahrensschritte wiederholt werden.

Das Verfahren zur Kalibrierung betrifft insbesondere die Regelung der Kupplungen des Antriebssystems, so dass diese zu vorgegebenen Zeitpunkten oder sogar jeder Zeit durch einen kalibrierten Betätigungsdruck überprüft bzw. betätigt werden und damit ein von der Antriebseinheit bereitgestelltes erstes Drehmoment in gewünschter Weise auf die Räder einer gemeinsamen Achse des Kraftfahrzeuges übertragen werden kann.

Insbesondere ist das Verfahren zur Regelung eines Antriebssystems vorgesehen, bei dem an einer gemeinsamen Achse des Kraftfahrzeuges zwei Kupplungen vorgesehen sind, wobei über jede der zwei Kupplungen jeweils ein Rad des Kraftfahrzeuges mit der Antriebseinheit des Kraftfahrzeuges drehmomentübertragend verbunden wird. Die zwei Kupplungen können das sonst übliche Differential ersetzen, durch das unterschiedliche Drehzahlen der Räder ausgeglichen werden können.

Der Aufbau derartiger Kupplungen und Antriebssysteme kann wie folgt beschrieben werden. Es können z. B. Lamellenkupplungen als Kupplungen eingesetzt werden, bei denen Außenlamellen mit einem Lamellenaußenträger und Innenlamellen mit einem Lamelleninnenträger drehfest verbunden sind und jeder Lamellenträger mit der Antriebswelle oder der jeweiligen Abtriebswelle drehfest verbunden ist. Infolge einer Beaufschlagung mit einer in einer axialen Richtung wirkenden Schließkraft (infolge des Betätigungsdrucks) werden die Lamellen, bei anderen Kupplungen die Reibpartner, miteinander in Kontakt gebracht, so dass ein Drehmoment von der Antriebswelle über die Kupplung auf die jeweilige Abtriebswelle übertragen werden kann.

Vor einer ersten Inbetriebnahme des Antriebssystems kann der für die Übertragung eines ersten Drehmoments der Antriebseinheit erforderliche Betätigungsdruck der jeweiligen Kupplung unbekannt sein. Weiter kann sich z. B. im Laufe des Betriebs des Antriebssystems der für die Übertragung des ersten Drehmoments (und/oder des auf die erste Kupplung und zweite Kupplung aufgeteilten Drehmoments) erforderliche Betätigungsdruck der Kupplung verändern. Insbesondere kann der Betätigungsdruck und/oder auch dessen Veränderung für die erste Kupplung und die zweite Kupplung unterschiedlich sein.

Eine "Kalibrierung" umfasst hierbei insbesondere eine zuverlässig reproduzierbare Feststellung und Dokumentation der Abweichung der gewünschten und tatsächlich übertragenen Drehmomente. Als weiterer Prozess kann unter Berücksichtigung der ermittelten Abweichung bei der anschließenden Benutzung des Antriebssystems eine Korrektur umfasst sein. Das kann weiter zu einem integrierten Abgleich und/oder einer Justierung der Regelung der Antriebseinheit führen, wenn z. B. die festgestellte Abweichung unzulässig hoch ist. Nach jeder Justierung kann eine erneute Überprüfung der Regelung der Antriebseinheit stattfinden, um die durchgeführten Änderungen zu prüfen.

Mit dem hier vorgeschlagenen Verfahren ist nun eine Kalibrierung des Betätigungsdrucks auch während des Betriebs des Antriebssystems möglich. Dazu wird (lediglich) ein erstes Drehmoment durch die Antriebseinheit bereitgestellt und aufgrund eines vorliegenden Betriebspunktes (der z. B. durch eine Anforderung eines Fahrers des Kraftfahrzeuges definiert ist) auf die Räder übertragen und dabei ggf. aufgeteilt.

Im Rahmen des Schritts a) wird ein erstes Drehmoment an der Antriebseinheit für einen vorgebbaren Betriebspunkt bereitgestellt. Dieses kann z. B. aufgrund einer Anforderung eines Fahrers des Kraftfahrzeuges durch die Antriebseinheit erzeugt werden, z. B. durch Betätigung eines Pedals.

Der Betriebspunkt kann so vorbestimmt sein, dass ungleiche Verteilung der Drehmomente auf die Abtriebswellen erfolgen soll.

In dem Betriebspunkt, in dem beide Kupplungen gleichviel Drehmoment übertragen jedoch ein gewünschtes Summenmoment nicht stimmt, kann es ebenfalls sinnvoll sein, beide Kupplungen gleichermaßen wie nachfolgend erläutert zu korrigieren bis das Summenmoment stimmt. Der durchschnittliche Fehler kann auch in diesem Fall reduziert werden, auch wenn nicht zwangsweise die Verteilung der Drehmomente auf die beiden Kupplungen deutlich besser wird.

In Schritt b) werden ein erster Betätigungsdruck für die erste Kupplung und ein zweiter Betätigungsdruck für die zweite Kupplung aus einem ersten Kennfeld ermittelt. Die beiden Betätigungsdrücke sollen eine betriebspunktabhängige Übertragung und Aufteilung des ersten Drehmoments auf die beiden Abtriebswellen bewirken (ggf. unter Berücksichtigung einer Übersetzung zwischen der Antriebseinheit und der Abtriebswellen). Dabei kann das erste Drehmoment auch zu ungleichen Anteilen aufgeteilt werden, z. B. aufgrund unterschiedlicher Traktionsbedingungen an den Rädern, aufgrund von Kurvenfahrten und/oder aufgrund einer aktiven Fahrwerkssteuerung (*"torque control"*), bei der Drehmomente in Abhängigkeit von einem gewünschten Fahrverhalten (Untersteuern, Übersteuern, Neutral) im Wesentlichen frei auf die Räder aufgeteilt werden können.

Über die erste Kupplung soll insbesondere ein erstes Soll-Drehmoment und über die zweite Kupplung ein zweites Soll-Drehmoment übertragen werden, wobei die Soll-Drehmomente in Summe dem von der Antriebseinheit bereitgestellten ersten Drehmoment, insbesondere unter Berücksichtigung einer Übersetzung zwischen der Antriebseinheit und der Abtriebswellen, entsprechen.

In dem ersten Kennfeld können also für unterschiedliche Betriebspunkte und erste Drehmomente jeweils spezifizierte Betätigungsdrücke hinterlegt bzw. vorgegeben sein, die an den Kupplungen zur Übertragung und ggf. Aufteilung des ersten Drehmoments anzulegen sind.

Bei den beiden Kupplungen können z. B. aufgrund von Verschleiß und/oder einer noch nicht durchgeführten Kalibrierung bei der Erstinbetriebnahme des Antriebssystems Abweichungen bei der gewünschten bzw. vorgegebenen Applizierung der Betätigungsdrücke auftreten. Diese Abweichungen äußern sich durch ermittelbare Ist-Differenzdrehzahlen.

In Schritt c) werden eine erste Ist-Differenzdrehzahl zwischen der ersten Abtriebswelle und der Antriebswelle und eine zweite Ist-Differenzdrehzahl zwischen der zweiten Abtriebswelle und der Antriebswelle ermittelt.

Diese Ist-Differenzdrehzahlen (Werte einschließlich "Null") erlauben einen Rückschluss auf die eingestellten und tatsächlich applizierten Betätigungsdrücke der Kupplungen. Bei einem zu hohen Betätigungsdruck beträgt die Ist-Differenzdrehzahl den Wert 0 Umdrehungen pro Minute. Bei einem zu niedrigen Betätigungsdruck ist die Ist-Differenzdrehzahl ungleich 0 Umdrehungen pro Minute und insbesondere niedriger als eine vorbestimmte Soll-Differenzdrehzahl. Bei einem zu niedrigen Betätigungsdruck ist die Antriebswellen-Drehzahl höher als die erste bzw. zweite Drehzahl der jeweiligen Abtriebswelle.

Bei einem zu niedrigen Betätigungsdruck kann durch den Schlupf zwischen der mindestens einen Abtriebswelle und der Antriebswelle Reibungswärme in der Kupplung generiert werden. Diese kann zumindest zu einer Beschädigung der Kupplung führen. Bei einem zu hohen Betätigungsdruck kann nicht sichergestellt werden, dass das von der Antriebseinheit bereitgestellte Drehmoment in der gewünschten Weise und Aufteilung auf die Abtriebswellen übertragen wird.

Die Ist-Differenzdrehzahlen wie auch die Drehzahlen der Antriebseinheit können mittels der Steuereinheit ermittelt werden. Diese kann z. B. über Drehzahlsensoren die Antriebswellen-Drehzahl und die Drehzahlen der Abtriebswellen ermitteln.

Insbesondere wird eine Soll-Differenzdrehzahl zwischen den beiden Abtriebswellen und der Antriebswelle vorgegeben. Dieser sogenannte Mikro-Schlupf an den jeweiligen Kupplungen ermöglicht es, dass exakt bestimmbar ist, was für ein Drehmoment über beide Kupplungen in Summe übertragen wird. Eine Ermittlung des über jede einzelne Kupplung übertragenen Drehmoments, also die tatsächliche Verteilung des ersten Drehmoments, ist nicht ermittelbar. Die Soll-Differenzdrehzahl ist insbesondere betriebspunktabhängig und liegt bei konstanter Antriebswellen-Drehzahl und konstanter Drehzahl der Abtriebswellen vor bzw. wird so eingestellt.

Im Rahmen von Schritt d) kann folgender Prozess d1) durchgeführt werden: Einstellen eines ersten kalibrierten Betätigungsdrucks für die erste Kupplung bis eine erste Soll-Differenzdrehzahl erreicht ist, und Einstellen eines zweiten kalibrierten Betätigungsdrucks für die zweite Kupplung bis eine zweite Soll-Differenzdrehzahl erreicht ist.

Im Rahmen von Schritt d) kann folgender Prozess d2) durchgeführt werden: Einstellen eines ersten kalibrierten Drehmoments an der Antriebseinheit bis eine erste Soll-Differenzdrehzahl an der ersten Kupplung und eine zweite Soll-Differenzdrehzahl an der zweiten Kupplung erreicht ist.

Die Prozesse d1) und d2) können alternativ durchgeführt werden.

Die Betätigungsdrücke oder das erste Drehmoment an der Antriebseinheit werden - vorausgesetzt es liegt eine unerwünschte Abweichung vor - ausgehend von der in Schritt c) ermittelten Ist-Differenzdrehzahl hoch- oder heruntergeregelt und an der Kupplung angelegt, bis eine vorbestimmte Soll-Differenzdrehzahl an der jeweiligen Kupplung vorliegt.

Die Schritte c) und d) können dabei iterativ durchgeführt werden, bis eine vorgegebene Soll-Differenzdrehzahl an der jeweiligen Kupplung vorliegt.

In Schritt e) wird ein zweites Kennfeld unter Berücksichtigung der kalibrierten Betätigungsdrücke oder des ersten kalibrierten Drehmoments an der Antriebseinheit aus Schritt d) erstellt. Bei der Erstellung des zweiten Kennfelds
- wird zunächst der höhere Wert der Betätigungsdrücke (also des ersten Betätigungsdrucks und des zweiten Betätigungsdrucks) geändert oder
- es werden beide Betätigungsdrücke gleichzeitig geändert, nämlich in einer von ihrem Wert abhängigen Gewichtung.

Eine proportionale Änderung der Betätigungsdrücke wird hier also insbesondere nicht vorgenommen, sondern bevorzugt nur dann, wenn der Betriebspunkt in Schritt a) eine gleiche Verteilung des ersten Drehmoments auf die Kupplungen erfordert.

Die Erstellung des neuen Kennfeldes kann rechnerisch erfolgen, womit insbesondere die Berechnung eines Korrektor-Vektors/Kennfeldes und/oder die kontinuierliche Multiplikation des vorherigen Kennfeldes mit einem ermittelten Korrekturvektor erfasst ist. Die Erstellung des neuen Kennfeldes kann so erfolgen, dass ein bereits gespeichertes Kennfeld in Abhängigkeit der ermittelten Abweichung ausgewählt und/oder aktiviert wird. Das zweite Kennfeld ersetzt insbesondere das erste Kennfeld, so dass bei einer nachfolgenden Betätigung des Antriebssystems, auch bei Durchführung der Schritte a) und b), auf das zweite Kennfeld zurückgegriffen werden kann. Die kalibrierten Betätigungsdrücke aus dem zweiten Kennfeld ersetzen also die Betätigungsdrücke aus dem ersten Kennfeld.

Insbesondere kann in einem weiteren Schritt f) das erste Kennfeld durch das zweite Kennfeld ersetzt werden, so dass ein neues erstes Kennfeld vorliegt.

Insbesondere kann das zu übertragende erste Drehmoment zumindest aus dem an der elektrischen Maschine anliegenden elektrischen Motorstrom ermittelt werden.

Der in Schritt b) applizierte erste Betriebsdruck kann einem an der ersten Kupplung theoretisch übertragbaren ersten Drehmoment und der zweite Betriebsdruck einem an der zweiten Kupplung theoretisch übertragbaren zweiten Drehmoment entsprechen.

Durch Schritt c) kann eine Abweichung zwischen einem durch beide Kupplung gemeinsam zu übertragenden summarischen Soll-Drehmoment (Summe aus erstem und zweitem Soll-Drehmoment) und einem theoretisch übertragbaren summarischen Drehmoment (Summe aus theoretisch übertragbaren ersten und zweiten Drehmoment) feststellbar sein. Diese Abweichung ist durch eine Einstellung der kalibrierten Betätigungsdrücke oder des kalibrierten ersten Drehmoments an der Antriebsachse gemäß Schritt d) korrigierbar. Diese Abweichung wird bei der Erstellung des zweiten Kennfelds berücksichtigt.

Das theoretisch übertragbare Drehmoment ist insbesondere ein gemäß dem vorhandenen Kennfeld dem applizierten Betriebsdruck zugeordnetes Drehmoment.

Die in Schritt b) ggf. zu hohen oder zu niedrigen applizierten Betriebsdrücke entsprechen einem an der ersten Kupplung theoretisch übertragbaren ersten Drehmoment (zunächst z. B. höher oder geringer als ein tatsächlich zu übertragendes erstes Soll-Drehmoment) und einem an der zweiten Kupplung theoretisch übertragbaren zweiten Drehmoment (zunächst z. B. höher oder geringer als ein tatsächlich zu übertragendes zweites Soll-Drehmoment). Die Summe der theoretisch übertragbaren Drehmomente kann entsprechend eine Abweichung von dem von der Antriebseinheit bereitgestellten ersten Drehmoment (und damit eine Abweichung von einer Summe des ersten Soll-Drehmoments und des zweiten Soll-Drehmoments) aufweisen. Diese Abweichung kann anhand der Differenzdrehzahlen in Schritt c) ermittelt und nun durch eine Kalibrierung gemäß Schritt d) (z. B. iterativ) korrigiert und/oder in seinem Ausmaß bestimmt werden.

In Abhängigkeit der Abweichung der summarischen bereitgestellten bzw. theoretischen Drehmomente kann das Kennfeld in Schritt e) erstellt bzw. modifiziert werden.

Das vorgeschlagene Verfahren ist insbesondere so eingerichtet, dass davon ausgegangen wird, dass der größere Teil des Fehlers bzw. der Abweichung des summarischen Drehmoments bei der Kupplung mit der stärkeren Aktuierung vorliegt (also die Kupplung mit dem höheren Betätigungsdruck). Es wird also insbesondere vorgeschlagen, den im Kennfeld hinterlegten Betätigungsdruck dieser Kupplung zuerst (und alleine) oder (bei Änderung beider Betätigungsdrücke) stärker anzupassen als den Betätigungsdruck der schwächer aktuierten Kupplung. Diese Anpassung des ersten Kennfeldes kann generell mittels Korrekturfaktoren, speziell für spezifische Betriebspunkte mittels Korrekturvektoren oder Korrekturkennfelder oder durch Erstellung eines neuen Kennfeldes geschehen.

Bei jeder folgenden Aktuierung bzw. bei jeder folgenden Durchführung des Verfahrens kann erneut ermittelt werden, ob eine Abweichung der Summe der theoretisch übertragbaren Drehmomente von dem (dann angelegten) ersten Drehmoment vorliegt. Dies kann jeweils in Schritt c) durch Ermittlung der Differenzdrehzahlen verifiziert werden.

Zumindest eine der beiden Kupplungen kann eine hydraulisch betätigte Kupplung sein, bevorzugt sind das beide Kupplungen. Bei einer hydraulisch betätigten Kupplung wird der Betätigungsdruck über ein Hydraulikfluid auf die Kupplung übertragen. Das Hydraulikfluid kann über eine (auch elektrisch betreibbare) Pumpe unter Druck gesetzt werden.

Zumindest eine der beiden Kupplungen kann eine elektrisch betätigte Kupplung sein, bevorzugt sind das beide Kupplungen. Bei einer elektrisch betätigten Kupplung wird der Betätigungsdruck unmittelbar durch eine elektrische Maschine erzeugt, z. B. durch eine über die Maschine verdrehbare Rampenanordnung.

Insbesondere werden mittels der Steuereinheit zumindest ein elektrischer Motorstrom und eine Motordrehzahl der Antriebseinheit erfasst. Die Motordrehzahl der Antriebseinheit kann über die Antriebswellen-Drehzahl der Antriebswelle ermittelt werden oder umgekehrt.

Insbesondere werden die Schritte a) bis e) kontinuierlich durchgeführt. Das meint insbesondere, dass jedes Mal, wenn die Schritte a) bis d) durchgeführt werden, auch der Schritt e) ausgeführt wird. Kontinuierlich heißt demnach insbesondere, dass der Schritt e) in vorgebbaren Betriebspunkten bzw. Fahrsituationen immer eingeleitet wird.

Gemäß einer anderen Ausgestaltung des Verfahrens werden die Schritte a) bis e) periodisch (zu vorgebbaren Zeitpunkten) durchgeführt. D. h. insbesondere, dass die Schritte a) bis d) mehrmals aufeinanderfolgend durchgeführt werden, ohne dass der Schritt e) zumindest eingeleitet wird. Insbesondere wird eine Periode in Abhängigkeit von zumindest einem der folgenden Parameter bestimmt: der Zeit, der Betriebsdauer des Antriebssystems, der mehr oder weniger intensiven Beanspruchung des Antriebssystems. Eine Periode kann einen oder mehrere Tage umfassen oder zwischen 10 Stunden und 100 Stunden Betriebsdauer. Die Periode kann insbesondere in Abhängigkeit von der Beanspruchung des Antriebsystems variabel sein.

Insbesondere kann infolge der Betätigung jeder der Kupplungen jeweils ein Rad der gemeinsamen Achse des Kraftfahrzeuges mit der Antriebseinheit drehmomentübertragend verbunden werden.

Bevorzugt ist zumindest eine Kupplung, insbesondere sind beide Kupplungen, eine Lamellenkupplung.

Zwischen der Antriebseinheit und den Abtriebswellen kann ein Getriebe mit einer variablen Übersetzung angeordnet sein. Variable Übersetzung bedeutet insbesondere, dass nicht eine einzige konstante Übersetzung vorliegt, sondern dass die Übersetzung verändert werden kann, z. B. in Stufen oder auch kontinuierlich.

Zwischen der Antriebseinheit und den Abtriebswellen kann alternativ kein Getriebe oder ein Getriebe mit einer einzigen festen Übersetzung angeordnet sein.

Die Eigenschaften, der Aufbau und/oder die Funktionsweise des jeweils vorliegende Getriebe ist bei dem Verfahren wie vorstehend beschrieben zu berücksichtigen.

Es wird weiter ein Kraftfahrzeug vorgeschlagen, zumindest aufweisend ein Antriebssystem für zumindest eine Achse des Kraftfahrzeuges. Das Antriebssystem umfasst zumindest
- eine elektrische Maschine als Antriebseinheit,
- eine von der Antriebseinheit angetriebene Antriebswelle,
- eine erste Abtriebswelle und eine zweite Abtriebswelle sowie
- eine die Antriebswelle mit der ersten Abtriebswelle verbindende erste Kupplung und
- eine die Antriebswelle mit der zweiten Abtriebswelle verbindende zweite Kupplung und weiter
- eine Steuereinheit zur Regelung der Antriebseinheit und der Kupplungen sowie zur Ermittlung von Drehzahlen der Antriebswelle und der Abtriebswellen,
wobei das Antriebssystem eingerichtet und dafür ausgelegt ist, mit dem vorgeschlagenen Verfahren betrieben zu werden.

Insbesondere sind die beiden Kupplungen zur Übertragung von Drehmomenten an einer Achse eines Kraftfahrzeuges angeordnet, so dass durch das Betätigen der ersten Kupplung ein erstes Rad einer Achse und durch das Betätigen der zweiten Kupplung ein zweites Rad derselben Achse des Kraftfahrzeuges mit der Antriebseinheit drehmomentübertragend verbunden wird. Die Kupplungen sind also insbesondere keine Kupplung eines Kraftfahrzeuges, die zwischen der Antriebseinheit und einem schaltbaren Getriebe des Kraftfahrzeuges angeordnet ist. Derartige, gemeinsam an einer Achse angeordnete Kupplungen müssen (oft) sprunghafte Änderungen eines ersten Drehmoments verarbeiten und dieses in vorbestimmter Weise an die Räder weiterleiten. Eine ständige bzw. periodische Anpassung des Kennfelds im Betrieb des Kraftfahrzeuges (und nicht nur bei Werkstattaufenthalten oder bei der Erstinbetriebnahme) ist daher besonders vorteilhaft.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug mit einem Antriebssystem zum Antrieb jeweils eines Rades des Kraftfahrzeugs;
- Fig. 2:: einen Ablauf eines Verfahrens zur Kalibrierung eines Antriebssystems; und
- Fig. 3:: eine Darstellung der Verläufe der Drehmomente über der Zeit während eines Verfahrens zur Kalibrierung eines Antriebssystems.

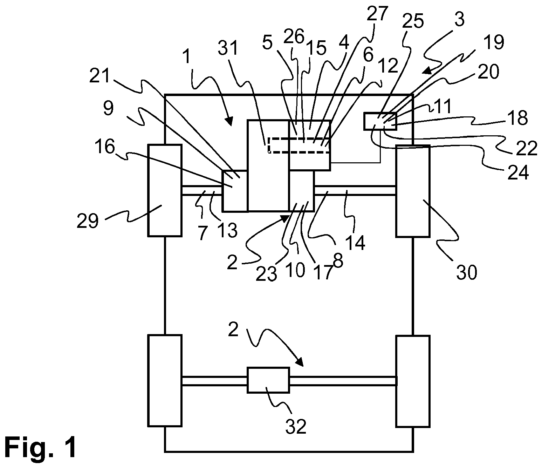

Fig. 1 zeigt ein Kraftfahrzeug 3 mit einem Antriebssystem 1 zum Antrieb jeweils eines ersten Rades 29 und eines zweiten Rades 30 einer gemeinsamen Achse 2 des Kraftfahrzeugs 3. Das Antriebssystem 1 umfasst eine elektrische Maschine 4 als Antriebseinheit 5, eine von der Antriebseinheit 5 angetriebene Antriebswelle 6, eine erste Abtriebswelle 7 und eine zweite Abtriebswelle 8 sowie eine die Antriebswelle 6 mit der ersten Abtriebswelle 7 verbindende erste Kupplung 9 und eine die Antriebswelle 6 mit der zweiten Abtriebswelle 8 verbindende zweite Kupplung 10. Weiter ist eine Steuereinheit 11 zur Regelung der Antriebseinheit 1 und der beiden Kupplungen 9, 10 sowie zur Ermittlung von Drehzahlen 12, 13, 14 der Antriebswelle 6 und der beiden Abtriebswellen 7, 8 vorgesehen.

Hier ist ein Antriebssystem 1 dargestellt, bei dem an einer gemeinsamen Achse 2 des Kraftfahrzeuges 3 zwei Kupplungen 9, 10 vorgesehen sind, wobei über jede der zwei Kupplung 9, 10 jeweils ein Rad 29, 30 des Kraftfahrzeuges 3 mit der Antriebseinheit 5 des Kraftfahrzeuges 3 drehmomentübertragend verbunden wird. Die zwei Kupplungen 9, 10 ersetzen ein sonst übliches Differential 32 (hier an der anderen Achse des Kraftfahrzeugs dargestellt), durch das unterschiedliche Drehzahlen der Räder ausgeglichen werden können.

Zwischen der Antriebseinheit 5 und den Abtriebswellen 7, 8 ist ein Getriebe 31 mit einer variablen Übersetzung angeordnet.

Das Verfahren zur Kalibrierung betrifft die Regelung der Kupplungen 9, 10 des Antriebssystems 1, so dass diese zu jeder Zeit durch einen kalibrierten Betätigungsdruck 21, 23 betätigt werden können. Damit kann ein von der Antriebseinheit 5 bereitgestelltes erstes Drehmoment 15 in gewünschter Weise (und Verteilung) auf die Räder 29, 30 einer gemeinsamen Achse 2 des Kraftfahrzeuges 3 übertragen werden.

Mit dem hier vorgeschlagenen Verfahren ist eine Kalibrierung des Betätigungsdrucks 16, 17, 21, 23 auch während des Betriebs des Antriebssystems 1 möglich. Dazu wird ein erstes Drehmoment 15 durch die Antriebseinheit 5 bereitgestellt und dieses aufgrund eines vorliegenden Betriebspunktes (der z. B. durch eine Anforderung eines Fahrers des Kraftfahrzeuges 3 definiert ist) auf die Räder 29, 30 (anteilig) übertragen.

Im Rahmen des Schritts a) wird ein erstes Drehmoment 15 an der Antriebseinheit 5 bereitgestellt. Dieses kann z. B. aufgrund einer Anforderung eines Fahrers des Kraftfahrzeuges 3 durch die Antriebseinheit erzeugt werden.

In Schritt b) wird in der Steuereinheit 11 ein erster Betätigungsdruck 16 für die erste Kupplung 9 und ein zweiter Betätigungsdruck 17 für die zweite Kupplung 10 aus einem ersten Kennfeld 18 ermittelt. Die Betätigungsdrücke 16, 17 sollen eine betriebspunktabhängige Übertragung und Aufteilung des ersten Drehmoments 15 auf die Abtriebswellen 7, 8 bewirken. Dabei kann das erste Drehmoment 15 auch unterschiedlich aufgeteilt werden. In dem ersten Kennfeld 18 können für unterschiedliche Betriebspunkte und erste Drehmomente 15 unterschiedliche Betätigungsdrücke 16, 17 hinterlegt sein, die an den Kupplungen 9, 10 zur Übertragung und ggf. Aufteilung des ersten Drehmoments 15 anzulegen sind.

In Schritt c) werden eine erste Ist-Differenzdrehzahl 19 zwischen der ersten Abtriebswelle 7 und der Antriebswelle 6 und eine zweite Ist-Differenzdrehzahl 20 zwischen der zweiten Abtriebswelle 8 und der Antriebswelle 6 ermittelt. Diese Ist-Differenzdrehzahlen 19, 20 erlauben einen Rückschluss auf die eingestellten und tatsächlich applizierten Betätigungsdrücke der Kupplungen 9, 10. Bei einem zu hohen Betätigungsdruck beträgt die Ist-Differenzdrehzahl 19, 20 "0" Umdrehungen pro Minute. Bei einem zu niedrigen Betätigungsdruck wird die Ist-Differenzdrehzahl 19, 20 ungleich "0" Umdrehungen pro Minute betragen und insbesondere niedriger sein als eine vorbestimmte Soll-Differenzdrehzahl 22, 24. Dabei ist die Antriebswellen-Drehzahl 12 höher als die erste Drehzahl 13 bzw. zweite Drehzahl 14 der jeweiligen Abtriebswelle 7, 8.

Die Ist-Differenzdrehzahlen 19, 20, wie auch die Drehzahl der Antriebseinheit 5 werden über die Steuereinheit 11 ermittelt. Diese kann über Drehzahlsensoren die Antriebswellen-Drehzahl 12 und die Drehzahlen 13, 14 der Abtriebswellen 7, 8 ermitteln.

Es wird eine Soll-Differenzdrehzahl 22, 24 zwischen den Abtriebswellen 7, 8 und der Antriebswelle 6 vorgegeben. Dieser sogenannte Mikro-Schlupf an den jeweiligen Kupplungen 9, 10 ermöglicht es, dass exakt bestimmbar ist, was für ein Drehmoment über die Kupplungen 9, 10 in Summe übertragen wird. Ein Rückschluss auf die tatsächliche Verteilung des ersten Drehmoments 15 auf die Kupplungen 9, 10 ist aber nicht möglich. Diese Soll-Differenzdrehzahl 22, 24 ist insbesondere betriebspunktabhängig und liegt bei konstanter Antriebswellen-Drehzahl 12 und konstanter Drehzahl 13, 14 der Abtriebswellen 7, 8 vor.

Die zu hohen oder zu niedrigen applizierten Betätigungsdrücke 16, 17 entsprechen einem an der ersten Kupplung 9 theoretisch übertragbaren ersten Drehmoment 35 (gemäß erstem Kennfeld 18) und einem an der zweiten Kupplung 10 theoretisch übertragbaren zweiten Drehmoment 36 (gemäß erstem Kennfeld 18). Die Summe der theoretisch übertragbaren Drehmomente 39 kann entsprechend eine Abweichung von dem von der Antriebseinheit 5 bereitgestellten ersten Drehmoment 15 aufweisen. Diese Abweichung kann nun durch eine Kalibrierung gemäß Schritt d) korrigiert werden.

In Schritt d) kann ein erster kalibrierter Betätigungsdruck 21 für die erste Kupplung 9 eingestellt werden, bis eine erste Soll-Differenzdrehzahl 22 erreicht ist und ein zweiter kalibrierter Betätigungsdruck 23 für die zweite Kupplung 10 eingestellt werden, bis eine zweite Soll-Differenzdrehzahl 24 erreicht ist. In Schritt d) kann - ggf. alternativ - ein kalibriertes erstes Drehmoments an der Antriebseinheit 5 eingestellt werden, bis die erste Soll-Differenzdrehzahl 22 und die zweite Soll-Differenzdrehzahl 24 erreicht ist.

Der Betätigungsdruck wird also unter Berücksichtigung der in Schritt c) ermittelten Ist-Differenzdrehzahl 19, 20 hoch- oder heruntergeregelt und an der Kupplung 9, 10 angelegt, bis eine vorbestimmte Soll-Differenzdrehzahl 22, 24 an der jeweiligen Kupplung 9, 10 vorliegt.

In Schritt e) wird ein zweites Kennfeld 25 unter Berücksichtigung der kalibrierten Betätigungsdrücke 21, 23 oder des kalibriertes erstes Drehmoments an der Antriebseinheit 5 erstellt. Das zweite Kennfeld 25 ersetzt insbesondere das erste Kennfeld 18, so dass bei einer darauffolgenden Betätigung des Antriebssystems 1, auch bei Durchführung der Schritte a) und b), auf das zweite Kennfeld 25 zurückgegriffen werden kann. Die korrigierten Betätigungsdrücke aus dem neu erstellten bzw. zweiten Kennfeld 25 ersetzen also die Betätigungsdrücke 16, 17 aus dem ersten Kennfeld 18.

In einem weiteren Schritt f) kann das erste Kennfeld 18 durch das zweite Kennfeld 25 ersetzt werden, so dass ein neues erstes Kennfeld 18 vorliegt.

Das zweite Kennfeld 25 kann beispielhaft und einfach dadurch erstellt werden, dass erste Korrekturfaktoren 40 für die erste Kupplung 9 und zweite Korrekturfaktoren 41 für die zweite Kupplung 10 mit dem ersten Kennfeld 18 multipliziert werden.

Das zu übertragende erste Drehmoment 15 kann zumindest aus dem an der elektrischen Maschine 4 anliegenden elektrischen Motorstrom 26 ermittelt werden.

Über die Steuereinheit 11 werden zumindest ein elektrischer Motorstrom 26 und eine Motordrehzahl 27 der Antriebseinheit 5 erfasst. Die Motordrehzahl 27 der Antriebseinheit 5 kann über die Antriebswellen-Drehzahl 12 der Antriebswelle 6 ermittelt werden oder umgekehrt.

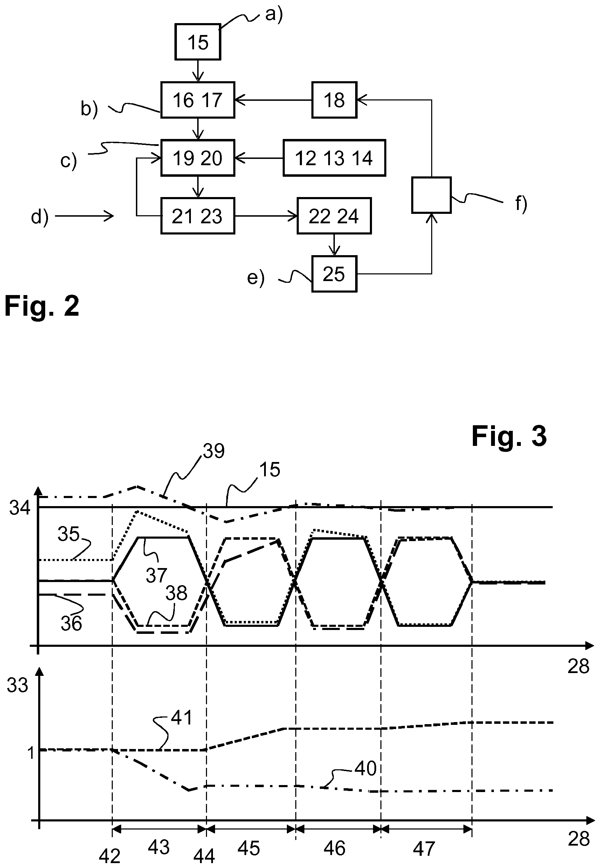

Fig. 2 zeigt einen Ablauf des Verfahrens. Auf die Ausführungen zu Fig. 1 wird Bezug genommen. Im Rahmen des Schritts a) wird ein erstes Drehmoment 15 an der Antriebseinheit 5 bereitgestellt.

In Schritt b) wird in der Steuereinheit 11 ein erster Betätigungsdruck 16 für die erste Kupplung 9 und ein zweiter Betätigungsdruck 17 für die zweite Kupplung 10 aus einem ersten Kennfeld 18 ermittelt.

In Schritt c) werden eine erste Ist-Differenzdrehzahl 19 zwischen der ersten Drehzahl 13 der ersten Abtriebswelle 7 und der Antriebswellen-Drehzahl 12 der Antriebswelle 6 und eine zweite Ist-Differenzdrehzahl 20 zwischen der zweiten Drehzahl 14 der zweiten Abtriebswelle 8 und der Antriebswellen-Drehzahl 12 der Antriebswelle 6 ermittelt.

Es wird eine Soll-Differenzdrehzahl 22, 24 zwischen den Abtriebswellen 7, 8 und der Antriebswelle 6 vorgegeben. Wahlweise kann in Schritt d) ein erster kalibrierter Betätigungsdruck 21 für die erste Kupplung 9 eingestellt werden, bis eine erste Soll-Differenzdrehzahl 22 erreicht ist, sowie ein zweiter kalibrierter Betätigungsdruck 23 für die zweite Kupplung 10 eingestellt werden, bis eine zweite Soll-Differenzdrehzahl 24 erreicht ist. In Schritt d) kann - ggf. alternativ - ein kalibriertes erstes Drehmoments an der Antriebseinheit 5 eingestellt werden, bis die erste Soll-Differenzdrehzahl 22 und die zweite Soll-Differenzdrehzahl 24 erreicht ist.

Der Betätigungsdruck wird unter Berücksichtigung der in Schritt c) ermittelten Ist-Differenzdrehzahl 19, 20 hoch- oder heruntergeregelt und an der Kupplung 9, 10 angelegt, bis eine vorbestimmte Soll-Differenzdrehzahl 22, 24 an der jeweiligen Kupplung 9, 10 vorliegt.

In Schritt e) wird ein zweites Kennfeld 25 unter Berücksichtigung der kalibrierten Betätigungsdrücke 21, 23 oder des kalibriertes erstes Drehmoments an der Antriebseinheit 5 erstellt. In einem weiteren Schritt f) kann das erste Kennfeld 18 durch das zweite Kennfeld 25 ersetzt werden, so dass ein neues erstes Kennfeld 18 vorliegt.

Fig. 3 zeigt eine Darstellung der Verläufe der Drehmomente 34 über der Zeit 28 und der Korrekturfaktoren 33 während des Verfahrens. Auf die Ausführungen zu den Fig. 1 und 2 wird Bezug genommen.

Im Rahmen des Schritts a) wird ein erstes Drehmoment 15 an der Antriebseinheit 5 bereitgestellt.

In Schritt b) wird in der Steuereinheit 11 ein erster Betätigungsdruck 16 für die erste Kupplung 9 und ein zweiter Betätigungsdruck 17 für die zweite Kupplung 10 aus einem ersten Kennfeld 18 ermittelt.

Die ggf. zu hohen oder zu niedrigen applizierten Betriebsdrücke 16, 17 entsprechen einem an der ersten Kupplung 9 theoretisch übertragbaren ersten Drehmoment 35 (zunächst höher als ein tatsächlich zu übertragendes erstes Soll-Drehmoment 37) und einem an der zweiten Kupplung 10 theoretisch übertragbaren zweiten Drehmoment 36 (zunächst geringer als ein tatsächlich zu übertragendes zweites Soll-Drehmoment 38).

Die Summe der theoretisch übertragbaren Drehmomente 39 kann entsprechend eine Abweichung von dem summarischen Soll-Drehmoment aufweisen. Diese Abweichung kann durch kalibrieren der Betätigungsdrücke oder des Antriebsdrehmoment gemäß Schritt d) identifiziert werden. In Schritt e) kann durch Erstellung eines zweiten Kennfeldes 25 (hier in sehr einfacher Form durch Multiplikation des ersten Kennfeldes 18 mit den Korrekturfaktor 40 für die erste Kupplung 9 und Korrekturfaktor 41 für die zweite Kupplung 10) ein neuer erster/zweiter Betätigungsdruck 16, 17 für Schritt b) ermittelt werden. Die Korrekturfaktoren 40, 41 werden im Rahmen des Schrittes e) wie dargestellt iterativ ermittelt um ein angepasstes bzw. zweites Kennfeld 25 zu erhalten.

Schritt e) setzt in diesem Beispiel ein, sobald das erste Drehmoment 15 in unterschiedlichem Maße über die erste Kupplung 9 und die zweite Kupplung 10 zu übertragen ist (erster Zeitpunkt 42). Durch Einstellen der Soll-Differenzdrehzahlen 22, 24 gemäß den Schritten a) bis d) wird festgestellt, dass die Summe der (über beide Kupplungen 9, 10 gemeinsam) theoretisch übertragenen Drehmomente 39 von dem zu übertragenden summarischen Soll-Drehmoment abweicht. In Schritt e) wird in dem ersten Intervall 43 das Kennfeld ausschließlich für die stärker aktuierte Kupplung angepasst, so dass die Kurve des theoretisch übertragbaren Drehmoments sich der Kurve des Soll-Drehmoments annähert.

Bei einer neuen Aktuierung der Kupplungen 9, 10 wird das Verfahren erneut durchgeführt (zweiter Zeitpunkt 44). Der Korrekturfaktor für das Kennfeld der nun stärker aktuierten anderen Kupplung 10, 9 wird hier ausschließlich geändert, wobei sich in dem zweiten Intervall 45 die Kurve des theoretisch übertragbaren zweiten Drehmoments 36 der Kurve des zweiten Soll-Drehmoments 38 annähert.

Das Verfahren wird in weiteren Intervallen (drittes Intervall 46, viertes Intervall 47) wie vorstehend zu den ersten beiden Intervallen 43, 45 beschrieben durchgeführt, bis eine Abweichung der Summe der theoretisch übertragbaren Drehmomente 39 von dem ersten Drehmoment 15 nicht mehr vorliegt, bzw. einen Grenzwert unterschreitet (also die Ist-Differenzdrehzahlen 13, 14 nicht mehr zu korrigieren sind).

Der erste Korrekturfaktor 40 entspricht in diesem Beispiel dem Verhältnis (Quotienten) von erstem Soll-Drehmoment 37 und theoretisch übertragbaren ersten Drehmoment 35. Der zweite Korrekturfaktor 41 entspricht dem Verhältnis (Quotienten) von zweitem Soll-Drehmoment 38 und theoretisch übertragbaren zweiten Drehmoment 36.

### Bezugszeichenliste

- 1: Antriebssystem
- 2: Achse
- 3: Kraftfahrzeug
- 4: Maschine
- 5: Antriebseinheit
- 6: Antriebswelle
- 7: erste Abtriebswelle
- 8: zweite Abtriebswelle
- 9: erste Kupplung
- 10: zweite Kupplung
- 11: Steuereinheit
- 12: Antriebswellen-Drehzahl
- 13: erste Drehzahl
- 14: zweite Drehzahl
- 15: erstes Drehmoment
- 16: erster Betätigungsdruck
- 17: zweiter Betätigungsdruck
- 18: erstes Kennfeld
- 19: erste Ist-Differenzdrehzahl
- 20: zweite Ist-Differenzdrehzahl
- 21: erster kalibrierter Betätigungsdruck
- 22: erste Soll-Differenzdrehzahl
- 23: zweiter kalibrierter Betätigungsdruck
- 24: zweite Soll-Differenzdrehzahl
- 25: zweites Kennfeld
- 26: Motorstrom
- 27: Motordrehzahl
- 28: Zeit
- 29: erstes Rad
- 30: zweites Rad
- 31: Getriebe
- 32: Differential
- 33: Korrekturfaktor
- 34: Drehmoment
- 35: theoretisch übertragbares erstes Drehmoment
- 36: theoretisch übertragbares zweites Drehmoment
- 37: erstes Soll-Drehmoment
- 38: zweites Soll-Drehmoment
- 39: Summe der theoretisch übertragbaren Drehmomente
- 40: erster Korrekturfaktor
- 41: zweiter Korrekturfaktor
- 42: erster Zeitpunkt
- 43: erstes Intervall
- 44: zweiter Zeitpunkt
- 45: zweites Intervall
- 46: drittes Intervall
- 47: viertes Intervall

## Patentansprüche

1. Verfahren zur Kalibrierung eines Antriebssystems (1) für eine Achse (2) eines Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) und eine zweite Abtriebswelle (8) sowie eine die Antriebswelle (6) mit der ersten Abtriebswelle (7) verbindende erste Kupplung (9) und eine die Antriebswelle (6) mit der zweiten Abtriebswelle (8) verbindende zweite Kupplung (10) und weiter eine Steuereinheit (11) zur Regelung der Antriebseinheit (5) und der Kupplungen (9, 10) sowie zur Ermittlung von Drehzahlen (12, 13, 14) der Antriebswelle (6) und der Abtriebswellen (7, 8) aufweist; wobei das Verfahren zumindest die folgenden Schritte aufweist:
a) Bereitstellen eines ersten Drehmoments (15) an der Antriebseinheit (5) für einen ersten Betriebspunkt;
b) Ermitteln eines ersten Betätigungsdrucks (16) für die erste Kupplung (9), Ermitteln eines zweiten Betätigungsdrucks (17) für die zweite Kupplung (10) aus einem ersten Kennfeld (18) und Applizieren der Betätigungsdrücke (16, 17) zur betriebspunktabhängigen Übertragung und Aufteilung des ersten Drehmoments (15) auf die Abtriebswellen (7,8),
c) Ermitteln einer ersten Ist-Differenzdrehzahl (19) zwischen der ersten Drehzahl (13) der ersten Abtriebswelle (7) und der Antriebswellen-Drehzahl (12) der Antriebswelle (6) und einer zweiten Ist-Differenzdrehzahl (20) zwischen der zweiten Drehzahl (14) der zweiten Abtriebswelle (8) und der Antriebswellen-Drehzahl (12) der Antriebswelle (6);
d) entweder: Einstellen eines ersten kalibrierten Betätigungsdrucks (21) für die erste Kupplung (9) bis eine erste Soll-Differenzdrehzahl (22) erreicht ist und Einstellen eines zweiten kalibrierten Betätigungsdrucks (23) für die zweite Kupplung (10) bis eine zweite Soll-Differenzdrehzahl (24) erreicht ist,
oder Einstellen eines ersten kalibrierten Drehmoments an der Antriebseinheit (5) bis eine erste Soll-Differenzdrehzahl (22) an der ersten Kupplung (9) und eine zweite Soll-Differenzdrehzahl (24) an der zweiten Kupplung (10) erreicht ist;
e) Erstellen eines zweiten Kennfelds (25) unter Berücksichtigung der kalibrierten Betätigungsdrücke (21, 23) oder des ersten kalibrierten Drehmoments an der Antriebseinheit (5), wobei entweder zunächst der höhere Wert der Betätigungsdrücke (16, 17) geändert wird oder beide Betätigungsdrücke (16, 17) gleichzeitig in einer von ihrem Wert abhängigen Gewichtung geändert werden.

2. Verfahren nach Patentanspruch 1, wobei der in Schritt b) applizierte erste Betätigungsdruck (16) einem an der ersten Kupplung (9) theoretisch übertragbaren ersten Drehmoment (35) und der zweite Betätigungsdruck (17) einem an der zweiten Kupplung (10) theoretisch übertragbaren zweiten Drehmoment (36) entsprechen, wobei durch Schritt c) eine Abweichung zwischen einem durch beide Kupplung (9, 10) gemeinsam zu übertragenden summarischen Soll-Drehmoment und einem theoretisch übertragbaren summarischen Drehmoment feststellbar ist, diese Abweichung durch eine Einstellung der kalibrierten Betätigungsdrücke (21, 23) oder des kalibrierten ersten Drehmoments an der Antriebsachse (5) gemäß Schritt d) korrigierbar ist und diese Abweichung bei der Erstellung des zweiten Kennfelds (25) berücksichtigt wird.

3. Verfahren nach einem der vorhergehenden Patentansprüche, wobei zumindest die erste Kupplung (9) oder die zweite Kupplung (10) eine hydraulisch oder elektrisch betätigte Kupplung ist.

4. Verfahren nach einem der vorhergehenden Patentansprüche, wobei mittels der Steuereinheit (11) zumindest ein elektrischer Motorstrom (26) und eine Motordrehzahl (27) der Antriebseinheit erfasst werden.

5. Verfahren nach einem der vorhergehenden Patentansprüche, wobei die Schritte a) bis e) kontinuierlich durchgeführt werden.

6. Verfahren nach einem der vorhergehenden Patentansprüche 1 bis 4, wobei die Schritte a) bis e) periodisch durchgeführt werden.

7. Verfahren nach Patentanspruch 6, wobei eine Periode in Abhängigkeit von zumindest einem der folgenden Parameter bestimmt wird: der Zeit (28), der Betriebsdauer des Antriebssystems, der Beanspruchung des Antriebssystems.

8. Verfahren nach einem der vorhergehenden Patentansprüche, wobei durch die Betätigung jeder Kupplung (9, 10) jeweils ein Rad (29, 30) der gemeinsamen Achse (2) des Kraftfahrzeuges (3) mit der Antriebseinheit (5) drehmomentübertragend verbindbar ist.

9. Verfahren nach einem der vorhergehenden Patentansprüche, wobei zwischen der Antriebseinheit (5) und den Abtriebswellen (7, 8) ein Getriebe (31) mit einer variablen Übersetzung angeordnet ist.

10. Kraftfahrzeug (3), zumindest aufweisend ein Antriebssystem (1) für zumindest eine Achse (2) des Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) und eine zweite Abtriebswelle (8) sowie eine die Antriebswelle (6) mit der ersten Abtriebswelle (7) verbindende erste Kupplung (9) und eine die Antriebswelle (6) mit der zweiten Abtriebswelle (8) verbindende zweite Kupplung (10) und weiter eine Steuereinheit (11) zur Regelung der Antriebseinheit (5) und der Kupplungen (9, 10) sowie zur Ermittlung von Drehzahlen (12, 13, 14) der Antriebswelle (6) und der Abtriebswellen (7, 8) aufweist, wobei das Antriebssystem (1) mit einem Verfahren nach einem der vorhergehenden Patentansprüche betrieben wird.

## Claims

1. Method for calibrating a drive system (1) for an axle (2) of a motor vehicle (3), wherein the drive system (1) comprises at least one electric machine (4) as the drive unit (5), a drive shaft (6) driven by the drive unit (5), a first output shaft (7) and a second output shaft (8), as well as a first clutch (9) connecting the drive shaft (6) to the first output shaft (7) and a second clutch (10) connecting the drive shaft (6) to the second output shaft (8), and moreover a control unit (11) to regulate the drive unit (5) and the clutches (9, 10) as well as to determine rotational speeds (12, 13, 14) of the drive shaft (6) and the output shafts (7, 8); wherein the method involves at least the following steps:
a) providing a first torque (15) at the drive unit (5) for a first operating point;
b) determining a first actuating pressure (16) for the first clutch (9), determining a second actuating pressure (17) for the second clutch (10) from a first characteristic diagram (18) and applying the actuating pressures (16, 17) for the transmitting and apportioning of the first torque (15) to the output shafts (7, 8) depending on the operating point;
c) determining of a first actual differential rotational speed (19) between the first rotational speed (13) of the first output shaft (7) and the drive shaft rotational speed (12) of the drive shaft (6) and a second actual differential rotational speed (20) between the second rotational speed (14) of the second output shaft (8) and the drive shaft rotational speed (12) of the drive shaft (6);
d) either: adjusting a first calibrated actuating pressure (21) for the first clutch (9) until a first target differential rotational speed (22) is achieved and adjusting a second calibrated actuating pressure (23) for the second clutch (10) until a second target differential rotational speed (24) is achieved,
or adjusting a first calibrated torque at the drive unit (5) until a first target differential rotational speed (22) on the first clutch (9) and a second target differential rotational speed (24) on the second clutch (10) is achieved;
e) creating a second characteristic diagram (25) taking into account the calibrated actuating pressures (21, 23) or the first calibrated torque at the drive unit (5), wherein either the higher value of the actuating pressures (16, 17) is at first changed or both actuating pressures (16, 17) are changed at the same time in a weighting dependent on their value.

2. Method as claimed in claim 1, wherein the first actuating pressure (16) applied in step b) corresponds to a first torque (35) theoretically transmissible at the first clutch (9) and the second actuating pressure (17) corresponds to a second torque (36) theoretically transmissible at the second clutch (10), wherein a deviation between a total target torque transmitted jointly by both clutches (9, 10) and a theoretically transmissible total torque can be established by step c), this deviation can be corrected by an adjusting of the calibrated actuating pressures (21, 23) or the calibrated first torque on the drive axle (5) per step d) and this deviation is taken into account when creating the second characteristic diagram (25).

3. Method as claimed in one of the preceding claims, wherein at least the first clutch (9) or the second clutch (10) is a hydraulically or electrically operated clutch.

4. Method as claimed in one of the preceding claims, wherein at least an electrical motor current (26) and a motor rotational speed (27) of the drive unit are detected by means of the control unit (11).

5. Method as claimed in one of the preceding claims, wherein steps a) to e) are carried out continuously.

6. Method as claimed in one of the preceding claims 1 to 4, wherein steps a) to e) are carried out periodically.

7. Method as claimed in claim 6, wherein a period is determined in dependence on at least one of the following parameters: the time (28), the operating duration of the drive system, the strain on the drive system.

8. Method as claimed in one of the preceding claims, wherein each time one wheel (29, 30) of the common axle (2) of the motor vehicle (3) can be connected in torque transmitting manner to the drive unit (5) by the actuating of each clutch (9, 10).

9. Method as claimed in one of the preceding claims, wherein a transmission (31) with a variable transmission ratio is arranged between the drive unit (5) and the output shafts (7, 8).

10. Motor vehicle (3), comprising at least one drive system (1) for at least one axle (2) of the motor vehicle (3), wherein the drive system (1) comprises at least one electric machine (4) as the drive unit (5), a drive shaft (6) driven by the drive unit (5), a first output shaft (7) and a second output shaft (8), as well as a first clutch (9) connecting the drive shaft (6) to the first output shaft (7) and a second clutch (10) connecting the drive shaft (6) to the second output shaft (8), and moreover a control unit (11) to regulate the drive unit (5) and the clutches (9, 10) as well as to determine rotational speeds (12, 13, 14) of the drive shaft (6) and the output shafts (7, 8), wherein the drive system (1) is operated with a method according to one of the preceding claims.

## Revendications

1. Procédé d'étalonnage d'un système d'entraînement en entrée (1) pour un essieu (2) d'un véhicule automobile (3), le système d'entraînement en entrée (1) comportant au moins une machine électrique (4) servant d'unité d'entraînement en entrée (5), un arbre d'entraînement en entrée (6) entraîné en entrée par l'unité d'entraînement en entrée (5), un premier arbre d'entraînement en sortie (7) et un deuxième arbre d'entraînement en sortie (8) ainsi qu'un premier embrayage (9) reliant l'arbre d'entraînement en entrée (6) au premier arbre d'entraînement en sortie (7) et un deuxième embrayage (10) reliant l'arbre d'entraînement en entrée (6) au deuxième arbre d'entraînement en sortie (8) et en outre une unité de commande (11) pour régler l'unité d'entraînement en entrée (5) et les embrayages (9, 10) ainsi que pour déterminer les vitesses de rotation (12, 13, 14) de l'arbre d'entraînement en entrée (6) et des arbres d'entraînement en sortie (7, 8) ; le procédé comportant au moins les étapes suivantes :
a) mise à disposition d'un premier couple de rotation (15) au niveau de l'unité d'entraînement en entrée (5) pour un premier point de fonctionnement ;
b) détermination d'une première pression d'actionnement (16) pour le premier embrayage (9), détermination d'une deuxième pression d'actionnement (17) pour le deuxième embrayage (10) à partir d'une première caractéristique (18) et application des pressions d'actionnement (16, 17) à la transmission en fonction du point de fonctionnement et répartition du premier couple de rotation (15) sur les arbres d'entraînement en sortie (7, 8) ;
c) détermination d'une première vitesse de rotation différentielle réelle (19) entre la première vitesse de rotation (13) du premier arbre d'entraînement en sortie (7) et la vitesse de rotation d'arbre d'entraînement en entrée (12) de l'arbre d'entraînement en entrée (6) et une deuxième vitesse de rotation différentielle réelle (20) entre la deuxième vitesse de rotation (14) du deuxième arbre d'entraînement en sortie (8) et la vitesse de rotation d'arbre d'entraînement en entrée (12) de l'arbre d'entraînement en entrée (6) ;
d) soit : réglage d'une première pression d'actionnement (21) étalonnée pour le premier embrayage (9) jusqu'à atteindre une première vitesse de rotation différentielle théorique (22) et réglage d'une deuxième pression d'actionnement (23) étalonnée pour le deuxième embrayage (10) jusqu'à atteindre une deuxième vitesse de rotation différentielle théorique (24) ;
soit : réglage d'un premier couple de rotation étalonné au niveau de l'unité d'entraînement en entrée (5) jusqu'à atteindre une première vitesse de rotation différentielle théorique (22) au niveau du premier embrayage (9) et une deuxième vitesse de rotation différentielle théorique (24) au niveau du deuxième embrayage (10) ;
e) élaboration d'une deuxième caractéristique (25) en tenant compte des pressions d'actionnement (21, 23) étalonnées ou du premier couple de rotation étalonné au niveau de l'unité d'entraînement en entrée (5), soit la valeur la plus élevée des pressions d'actionnement (16, 17) étant d'abord modifiée soit les deux pressions d'actionnement (16, 17) étant modifiées simultanément dans une pondération dépendant de leur valeur.

2. Procédé selon la revendication 1, la première pression d'actionnement (16) appliquée à l'étape b) correspondant à un premier couple de rotation (35) pouvant être transmis sur le plan théorique au premier embrayage (9) et la deuxième pression d'actionnement (17) correspondant à un deuxième couple de rotation (36) pouvant être transmis sur le plan théorique au deuxième embrayage (10), l'étape c) permettant de détecter un écart entre un couple de rotation théorique sommaire à transmettre ensemble par les deux embrayages (9, 10) et un couple de rotation sommaire pouvant être transmis en théorie, ledit écart pouvant être corrigé par un réglage des pressions d'actionnement (21, 23) étalonnées ou du premier couple de rotation étalonné au niveau de l'essieu d'entraînement en entrée (5) selon l'étape d) et ledit écart étant pris en compte lors de l'élaboration de la deuxième caractéristique (25).

3. Procédé selon l'une quelconque des revendications précédentes, au moins le premier embrayage (9) ou le deuxième embrayage (10) étant un embrayage actionné façon hydraulique ou de façon électrique.

4. Procédé selon l'une quelconque des revendications précédentes, au moins un courant moteur électrique (26) et une vitesse de rotation du moteur (27) de l'unité d'entraînement en entrée étant détectés à l'aide de l'unité de commande (11).

5. Procédé selon l'une quelconque des revendications précédentes, les étapes a) à e) étant réalisées en continu.

6. Procédé selon l'une quelconque des revendications précédentes 1 à 4, les étapes a) à e) étant réalisées de façon périodique.

7. Procédé selon la revendication 6, une période étant définie en fonction d'au moins un des paramètres suivants : le temps (28), la durée de fonctionnement du système d'entraînement en entrée, la sollicitation du système d'entraînement en entrée.

8. Procédé selon l'une quelconque des revendications précédentes, respectivement une roue (29, 30) de l'essieu (2) commun du véhicule automobile (3) pouvant être reliée à l'unité d'entraînement en entrée (5) de façon à transmettre le couple de rotation par le biais de l'actionnement de chaque embrayage (9, 10).

9. Procédé selon l'une quelconque des revendications précédentes, une boîte de vitesses (31) dotée d'une démultiplication variable étant disposée entre l'unité d'entraînement en entrée (5) et les arbres d'entraînement en sortie (7, 8).

10. Véhicule automobile (3), comportant au moins un système d'entraînement en entrée (1) pour au moins un essieu (2) du véhicule automobile (3), le système d'entraînement en entrée (1) comportant au moins une machine électrique (4) prenant la forme d'une unité d'entraînement en entrée (5), un arbre d'entraînement en entrée (6) entraîné en entrée par l'unité d'entraînement en entrée (5), un premier arbre d'entraînement en sortie (7) et un deuxième arbre d'entraînement en sortie (8) ainsi qu'un premier embrayage (9) reliant l'arbre d'entraînement en entrée (6) au premier arbre d'entraînement en sortie (7) et un deuxième embrayage (10) reliant l'arbre d'entraînement en entrée (6) au deuxième arbre d'entraînement en sortie (8) et en outre une unité de commande (11) pour le réglage de l'unité d'entraînement en entrée (5) et des embrayages (9, 10) ainsi que pour déterminer les vitesses de rotation (12, 13, 14) de l'arbre d'entraînement en entrée (6) et des arbres d'entraînement en sortie (7, 8), le système d'entraînement en entrée (1) étant entraîné à l'aide d'un procédé selon l'une quelconque des revendications précédentes.
